# EUROPEAN PATENT APPLICATION

(11) **EP 4 708 153 A1**
(43) Date of publication of application: **11.03.2026**
(21) Application number: 24939047.7
(22) Date of filing: 26.11.2024
(51) Int. Cl.: G06N 5/022

(54) **FAULT RULE KNOWLEDGE BASE UPDATING METHODS AND APPARATUSES, DEVICE AND STORAGE MEDIUM**

(30) Priority: 10.05.2024 CN 202410574188
(71) Applicant: CRSC Research & Design Institute Group Co., Ltd., Beijing 100070 (CN)
(72) Inventor: TIAN, Hongda, Beijing 100070 (CN); CUI, Jianuo, Beijing 100070 (CN); CHEN, Zhiqiang, Beijing 100070 (CN); WANG, Dong, Beijing 100070 (CN); YANG, Tao, Beijing 100070 (CN); SHI, Mingming, Beijing 100070 (CN); SUN, Qimin, Beijing 100070 (CN); HU, Lili, Beijing 100070 (CN); SHI, Haodong, Beijing 100070 (CN); JING, Zekun, Beijing 100070 (CN); QIAO, Youyang, Beijing 100070 (CN); YANG, Xinhao, Beijing 100070 (CN)
(74) Representative: Samson & Partner Patentanwälte mbB
(86) International application number: PCT/CN2024/134651
(87) International publication number: WO 2025/232154

(57) **Abstract**

The present invention discloses a fault rule knowledge base updating method and apparatus, a device and a storage medium. The method is applied to a central server and comprises: acquiring node fault data and a node fault rule knowledge base uploaded by at least one node server, the node fault rule knowledge base being obtained by the node server updating an inherent fault rule knowledge base according to the node fault data and a node test data set; updating an inherent test data set through the node fault data to obtain a central test data set; updating the inherent fault rule knowledge base through each node fault rule knowledge base to obtain a central fault rule knowledge base; and transmitting the central test data set and the central fault rule knowledge base to each node server, then updating the node test data set of nodes of the node server according to the central test data set by each node server, and updating the node fault rule knowledge base of the nodes of the node server according to the central fault rule knowledge base.

## Description

### TECHNICAL FIELD

The present invention relates to the technical field of data processing, and specifically relates to a fault rule knowledge base updating method and apparatus, a device and a storage medium.

### BACKGROUND

China railways have achieved achievements in railway signal monitoring, but there are still several problems that need to be solved, such as insufficient level of intelligence in monitoring data analysis. Signal monitoring systems collect large amounts of data, but due to low level of intelligence, much of the data can only be analyzed manually. In recent years, some universities and research institutions in China have actively performed research on intelligent diagnostic analysis technologies for faults of railway signaling devices, promoting intelligent development of railway signal operation and maintenance technology. Particularly, some new devices or intelligent systems have be introduced for high-speed railways, but these new devices or intelligent systems have not a comprehensive and complete knowledge base for intelligent analysis and diagnostics, and therefore cannot fully replace manual analysis.

The reasons for not establishing the comprehensive and complete knowledge base mainly comprise:
1, with the continuous expansion of railway applications in China, rail network has become increasingly complex, and the volume of interactive information between signaling devices has grown massively, consequently, numerous scenarios and faults that are not included in the knowledge base have emerged. Since the railway signaling devices involve train-network-destination, especially for high-speed trains with fast speed and wide operational range, monitoring data is dispersed across the trains and various monitoring points along the route, the data is fragmented, and research and development subjects of intelligent analysis systems collect and organize data on new on-site problems too slowly, or the data cannot be fed back timely, consequently, research and development people cannot acquire complete fault data, and as a result, the iterative updating of the knowledge base cannot meet current practical applications.
2, the knowledge bases proprietary to the analysis systems generally exist in a form of a black box with machine source codes or configuration files. On-site operators lack the ability to edit or understand the rules, resulting in the analysis of faults and the updating of the knowledge bases being overly dependent on the research and development people, and frontline experts responsible for railway signal operation and maintenance are not involved in the establishing of the knowledge bases, resulting in some rules being one-sided and not covering all on-site operating conditions.

Therefore, how to quickly and comprehensively obtain on-site fault data, as well as collaboratively solve the problems of iterative updating to fault problems in the field, in order to continuously update and improve the fault knowledge base and realize a comprehensive and complete knowledge base and rapid iterative upgrading of the knowledge base, has become a problem that needs to be solved urgently.

### SUMMARY

The present invention provides a fault rule knowledge base updating method and apparatus, a device and a storage medium, aiming to realize rapid iterative updating and improvement of a fault rule knowledge base so as to obtain a comprehensive and complete fault rule knowledge base, thereby realizing intelligent fault diagnosis and analysis.

In a first aspect, the fault rule knowledge base updating method provided by the present invention is applied to a central server, and the method comprises:
acquiring node fault data and a node fault rule knowledge base uploaded by at least one node server, the node fault rule knowledge base being obtained by the node server updating an inherent fault rule knowledge base according to the node fault data and a node test data set when performing fault analysis on acquired node fault through the inherent fault rule knowledge base and failing in fault analysis;
updating an inherent test data set through the node fault data of each node server to obtain a central test data set;
updating the inherent fault rule knowledge base through the node fault rule knowledge base of each node server to obtain a central fault rule knowledge base; and
transmitting the central test data set and the central fault rule knowledge base to each node server, then updating the node test data set of the nodes of the node server according to the central test data set by each node server, and updating the node fault rule knowledge base of the nodes of the node server according to the central fault rule knowledge base.

In another aspect, the fault rule knowledge base updating method provided by the present invention is applied to a node server, and the method comprises:
acquiring node fault data and a node test data set;
carrying out fault analysis on the node fault data through an inherent fault rule knowledge base to obtain a fault analysis result;
if the fault analysis result is that the fault analysis fails, updating the inherent fault rule knowledge base according to the node fault data and the node test data set to obtain a node fault rule knowledge base;
uploading the node fault data and the node fault rule knowledge base of the fault to a central server, then updating the inherent fault rule knowledge base and the inherent test data set of the central server by the central server according to the node fault data and the node fault rule knowledge base, and obtaining and feeding back the updated central test data set and central fault rule knowledge base;
updating the node test data set of the nodes according to the central test data set; and
updating the node fault rule knowledge base of the nodes according to the central fault rule knowledge base.

In another aspect, the fault rule knowledge base updating apparatus provided by the present invention is applied to a central server, and the apparatus comprises:
a node knowledge base acquisition module configured for acquiring node fault data and a node fault rule knowledge base uploaded by at least one node server, the node fault rule knowledge base being obtained by the node server updating an inherent fault rule knowledge base according to the node fault data and a node test data set when performing fault analysis on acquired node fault through the inherent fault rule knowledge base and failing in fault analysis;
a test data set updating module configured for updating an inherent test data set through the node fault data of each node server to obtain a central test data set;
a knowledge base updating module configured for updating the inherent fault rule knowledge base through the node fault rule knowledge base of each node server to obtain a central fault rule knowledge base; and
a knowledge base feedback module configured for transmitting the central test data set and the central fault rule knowledge base to each node server, then updating the node test data set of the nodes of the node server according to the central test data set by each node server, and updating the node fault rule knowledge base of the nodes of the node server according to the central fault rule knowledge base.

In another aspect, the fault rule knowledge base updating apparatus provided by the present invention is applied to a node server, and the apparatus comprises:
a fault data acquisition module configured for acquiring node fault data and a node test data set;
a fault analysis module configured for carrying out fault analysis on the node fault data by an inherent fault rule knowledge base to obtain a fault analysis result;
a node knowledge base updating module configured for if the fault analysis result is that the fault analysis fails, updating the inherent fault rule knowledge base according to the node fault data and the node test data set to obtain a node fault rule knowledge base;
a node knowledge base uploading module configured for uploading the node fault data and the node fault rule knowledge base of the fault to a central server, then updating the inherent fault rule knowledge base and the inherent test data set of the central server by the central server according to the node fault data and the node fault rule knowledge base, and obtaining and feeding back the updated central test data set and central fault rule knowledge base;
a node data set updating module configured for updating the node test data set of the nodes according to the central test data set; and
a node knowledge base updating module configured for updating a node fault rule knowledge base of the nodes according to the central fault rule knowledge base.

In another aspect, the present invention provides an electronic device, which comprises:
at least one processor; and
a memory in communication connection with the at least one processor; and
the memory stores a computer program that can be executed by the at least one processor, and the at least one processor executes the fault rule knowledge base updating method in any embodiment of the present invention by executing the computer program.

In another aspect, the present invention provides a computer-readable storage medium, the computer-readable storage medium stores a computer instruction, and the computer instruction is used for enabling a processor to execute fault rule knowledge base updating method in any embodiment of the present invention.

According to the technical solution in the embodiments of the present invention, the method comprises: acquiring the node fault data and the node fault rule knowledge base uploaded by the at least one node server, the node fault rule knowledge base being obtained by the node server updating the inherent fault rule knowledge base according to the node fault data and the node test data set; updating the inherent test data set through the node fault data to obtain the central test data set; updating the inherent fault rule knowledge base through each node fault rule knowledge base to obtain the central fault rule knowledge base; and transmitting the central test data set and the central fault rule knowledge base to each node server, then updating the node test data set of the nodes of the node server according to the central test data set by each node server, and updating the node fault rule knowledge base of the nodes of the node server according to the central fault rule knowledge base. In the above technical solution, the fault rule knowledge base is updated by combining the fault data of each node server, therefore, the fault rule knowledge base is updated and perfected, the fault rule knowledge base is iteratively updated comprehensively, completely and rapidly, the updating range of the fault rule knowledge base and the fault data is greatly expanded, and the fault rule knowledge base is updated more comprehensively, accurately and effectively.

It is to be understood that the content described herein is not intended to identify the key or essential features of the embodiments of the present invention, nor to limit the scope of the present invention. Other features of the present invention will become easily understood through the following description.

### BRIEF DESCRIPTION OF THE DRAWINGS

To describe the embodiments of the present invention or the technical solutions in the prior art more clearly, the following briefly introduces the accompanying drawings required for describing the embodiments or the descriptions in the prior art. Apparently, the accompanying drawings in the following description show merely some embodiments of the present invention, and a person of ordinary skill in the art may still derive other drawings from these accompanying drawings without creative efforts.
FIG. 1A is a flow chart of a fault rule knowledge base updating method provided by an Embodiment 1 of the present invention;
FIG. 1B is a schematic diagram of fault analysis of a fault rule knowledge base provided according to an Embodiment 1 of the present invention;
FIG. 2 is a flow chart of a fault rule knowledge base updating method provided by an Embodiment 2 of the present invention;
FIG. 3A is a schematic diagram of an architecture of a fault rule knowledge base updating system provided by an Embodiment 3 of the present invention;
FIG. 3B is a schematic diagram of interaction of a fault rule knowledge base updating method provided by an Embodiment 3 of the present invention;
FIG. 4 is a schematic structural diagram of a fault rule knowledge base updating apparatus provided by an Embodiment 4 of the present invention;
FIG. 5 is a schematic structural diagram of a fault rule knowledge base updating apparatus provided by an Embodiment 5 of the present invention; and
FIG. 6 is a schematic structural diagram of an electronic device for implementing a fault rule knowledge base updating method according to an embodiment of the present invention.

### DETAILED DESCRIPTION

In order to specify the objective, technical solution and advantage of the examples of the present invention, we shall clearly and completely describe the technical solution in the examples of the present invention in combination with the drawings in the examples of the present invention as follows, it is obvious that the described examples are a part of the embodiments of the present invention, but not embody all examples. Based on the examples in the present invention, all other examples obtained by a person skilled in the art without doing the creative work belong to the protection scope of the present invention.

It is to be noted that the terms "first," "second," etc., in the specification and claims of the present invention and in the above accompanying drawings are used for distinguishing similar objects and are not necessarily used for describing a specific order or sequence. It is to be understood that the data used in this manner can be interchanged where appropriate so that the embodiments of the present invention described herein can be implemented in sequences other than those illustrated or described herein. In addition, the terms "comprising" and "having" and any of their variations are intended to cover non-exclusive inclusion; for example, a process, method, system, product, or device that comprises a series of steps or units is not necessarily limited to the steps or units specifically listed, but may comprise other steps or units that are not explicitly listed or that are inherent to these processes, methods, products, or devices.

### Embodiment 1

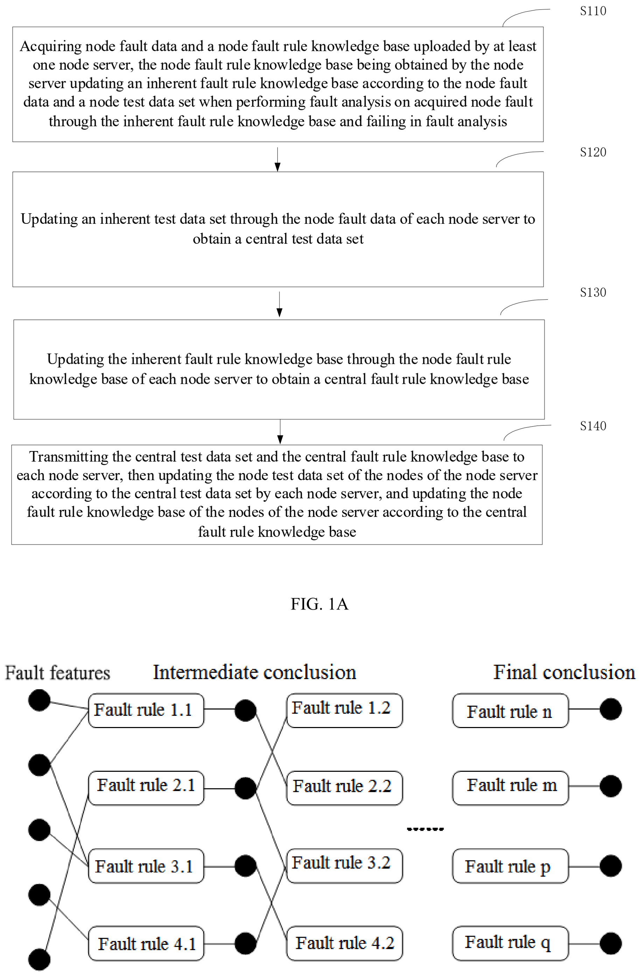

FIG. 1A is a flow chart of a fault rule knowledge base updating method provided by an Embodiment 1 of the present invention, and this embodiment can be suitable for a situation of comprehensively and automatically updating a fault rule knowledge base. The method can be implemented by a fault rule knowledge base updating apparatus, the fault rule knowledge base updating apparatus can be implemented in a form of hardware and/or software, and the fault rule knowledge base updating apparatus can be installed in an electronic device, for example, a central server.

As shown in FIG. 1A, the method is applied to the central server and comprises the following steps.

In step S110, node fault data and a node fault rule knowledge base uploaded by at least one node server are acquired; and the node fault rule knowledge base is obtained by the node server updating an inherent fault rule knowledge base according to the node fault data and the node test data set when performing fault analysis on the acquired node fault through the inherent fault rule knowledge base and failing in fault analysis.

The central server can be configured for generating, editing, collecting, merging, conflict solving, testing and issuing a knowledge base of a whole-path signal system.

By way of example, the central server can collect the node fault data and/or node fault rules uploaded by the at least one node server in real time. The node server can be a server deployed in different station sections.

The node fault rule knowledge base can be generated by the mode: acquiring the node fault data and the node test data set uploaded by a signal system device by the node server; performing fault analysis on the node fault data through the inherent fault rule knowledge base so as to obtain a fault analysis result; if the fault analysis result is that the fault analysis fails, updating the inherent fault rule knowledge base according to the node fault data and the node test data set so as to obtain the node fault rule knowledge base; and uploading the node fault data and the node fault rule knowledge base to the central server.

The node fault data can be fault data generated by the railway signal device of a station/section with the node server; and the node test data set can be a fault test data set which is generated through a large amount of different types of fault data and is configured for testing the fault rule knowledge base. The fault test data set can comprise fault test cases obtained by combining different fault data and is configured for carrying out rule test on the fault rule knowledge base.

At least one fault rule is configured in the fault rule knowledge base, and the fault rules have an association relationship; when the fault data with different fault features are inputted into the fault rule knowledge base, the fault rule can analyze the fault cause based on the fault features of the inputted fault data so as to obtain a fault conclusion; and if the obtained fault reason and/or fault conclusion is associated with other fault rules, the fault conclusion can be continuously analyzed through other fault rules so as to obtain a final fault conclusion.

In a specific embodiment, as shown in FIG. 1B, it is a schematic diagram of fault analysis of a fault rule knowledge base. The fault rule database comprises a plurality of pre-configured fault rules; after the fault data is inputted into the fault rule knowledge base, the fault features of the fault data are analyzed through different fault rule knowledge bases so as to obtain the final conclusion, namely the fault generation reason or the fault conclusion and the like. In the process of generating the final fault conclusion, intermediate conclusions generated after the fault features are analyzed by a plurality of fault rules may be involved, and the final conclusion is obtained after the fault analysis is carried out through the last fault rule that is associated with the intermediate conclusions.

By way of example, the node server utilizes the inherent fault rule knowledge base to perform fault analysis on the node fault data, and determines whether the conclusion data such as the fault reason corresponding to the node fault data can be successfully analyzed; if yes, the fault analysis result is that the fault analysis is successful; and if not, the fault analysis result is that the fault analysis fails. An initial fault rule database of the node server is distributed by the central server and is continuously optimized in subsequent fault analysis, so that the inherent fault rule database is continuously updated.

If the node server fails in fault analysis on the node fault data based on the inherent fault rule knowledge base, the node fault data and the node test data set will be utilized to update the inherent fault rule knowledge base so as to obtain the node fault rule knowledge base, and then the node fault data and the node fault rule knowledge base are uploaded to the central server.

In an optional embodiment, the updating the inherent fault rule knowledge base according to the node fault data and the node test data set to obtain the node fault rule knowledge base, comprises: updating the inherent fault rule knowledge base according to the node fault data to obtain the updated inherent fault rule knowledge base; updating the node test data set through the node fault data, and testing the updated inherent fault rule knowledge base through the updated node test data set to obtain a second test result; and if the second test result is that the test is passed, determining the updated inherent fault rule knowledge base to be the node fault rule knowledge base.

By way of example, the fault rule in the inherent fault rule knowledge base is updated according to the node fault data, and the specific updating way can be a way of manually updating the fault rules by related technicians such as related field experts based on the actual experience values, and can also be a way of automatically updating based on a pre-trained fault rule updating model. The fault rule updating model can be obtained by pre-training based on historical fault data.

The node server utilizes the fault data to update the inherent node test data set, specifically, it can be performed in a way of: adding the fault data into the test case in the node test data set; testing the updated inherent fault rule knowledge base through the updated node test data set to obtain the second test result; if the second test result is that the test is passed, determining the updated inherent fault rule knowledge base to be the node fault rule knowledge base, and transmitting the node fault data and the node fault rule knowledge base to the central server; and if the second test result is that the test is not passed, only feeding back the node fault data to the central server.

In step S120, the inherent test data set is updated through the node fault data of each node server to obtain a central test data set.

By way of example, the central server performs data merging on the node fault data of each node server, and updates the inherent test data set through the merged fault data, and specifically, the merged fault data can be included into the automatic test case set of the inherent test data set in an incremental manner, so as to obtain the central test data set.

In step S130, the inherent fault rule knowledge base is updated through the node fault rule knowledge base of each node server to obtain a central fault rule knowledge base.

By way of example, the central server performs rule merging on the fault rules in the node fault rule knowledge base of each node server to obtain the central fault rule knowledge base.

In step S140, the central test data set and the central fault rule knowledge base are transmitted to each node server, then the node test data set of the nodes of the node server is updated according to the central test data set by each node server, and the node fault rule knowledge base of the nodes of the node server is updated according to the central fault rule knowledge base.

In an optional embodiment, before the central test data set and the central fault rule knowledge base are transmitted to each node server, the central test data set is utilized to test the central fault rule knowledge base to obtain the first test result; and if the first test result is that the test is not passed, the node fault data of each node server is utilized to update the central fault rule knowledge base so as to obtain the updated central fault rule knowledge base.

By way of example, the central server utilizes the central test data set to test the central fault rule knowledge base, determines whether there is a rule conflict, and if so, namely, the first test result is that the test is not passed, the node fault data of each node server is utilized to update the central fault rule knowledge base, specifically, a fault alarm prompt can be given to remind related technicians to manually update; or automatic updating can be carried out in a model mode, specifically, the node fault data of each node server can be inputted into the pre-trained fault rule generation model to obtain the fault rules outputted by the model.

It is to be noted that the way of utilizing the automatic test case in the central test data set to perform automatic test on the central fault rule knowledge base can be timed testing, specifically, a fixed test triggering time can be set, and when the test triggering time is up, the test case will be automatically executed to automatically test the fault rule knowledge base.

By way of example, the central server transmits the central test data set and the central fault rule knowledge base to each node server; after receiving the central test data set and the central fault rule knowledge base, the node server updates a local inherent node test data set through the central test data set; and the local inherent node fault rule knowledge base is updated through the central fault rule knowledge base to obtain an updating result, including updating success and updating failure, and the updating result is fed back to the central server, so that the central server determines whether to perform subsequent updating measures.

It is to be noted that in the process that the node server tests the inherent node fault knowledge base based on the automatic test cases of the inherent node test data set, there may be test failure, at the moment, the node server cannot independently implement updating operation on the inherent node fault knowledge base, and the node fault will be uploaded to the central server so that the central server can implement the updating operation on the fault knowledge base.

In an optional embodiment, the node fault data uploaded by the node server is acquired; the inherent test data set is updated according to the node fault data to obtain the central test data set; the inherent fault rule knowledge base is updated according to the node fault data to obtain the central fault rule knowledge base; and the central fault rule knowledge base is tested through the central test data set, and the central fault rule knowledge base is fed back to the node server after the test is passed.

By way of example, the inherent test data set of the central server is updated according to the node fault data to obtain the central test data set; and the inherent fault rule knowledge base is updated through the node fault data, the specific way can be a manual or automatic updating way, which is not limited in this embodiment, and then the updated central fault rule knowledge base is obtained. The central fault rule knowledge base is tested through the central test data set, and the central fault rule knowledge base is fed back to the node server after the test is passed; and if the test is not passed, related technicians will intervene in knowledge base updating.

According to the technical solution in the embodiments of the present invention, the method comprises: acquiring the node fault data and the node fault rule knowledge base uploaded by the at least one node server, the node fault rule knowledge base being obtained by the node server updating the inherent fault rule knowledge base according to the node fault data and the node test data set; updating the inherent test data set through the node fault data to obtain the central test data set; updating the inherent fault rule knowledge base through each node fault rule knowledge base to obtain the central fault rule knowledge base; and transmitting the central test data set and the central fault rule knowledge base to each node server, then updating the node test data set of the nodes of the node server according to the central test data set by each node server, and updating the node fault rule knowledge base of the nodes of the node server according to the central fault rule knowledge base. In the above technical solution, the fault rule knowledge base is updated by combining the fault data of each node server, therefore, the fault rule knowledge base is updated and perfected, the fault rule knowledge base is iteratively updated comprehensively, completely and rapidly, the updating range of the fault rule knowledge base and the fault data is greatly expanded, and the fault rule knowledge base is updated more comprehensively, accurately and effectively.

### Embodiment 2

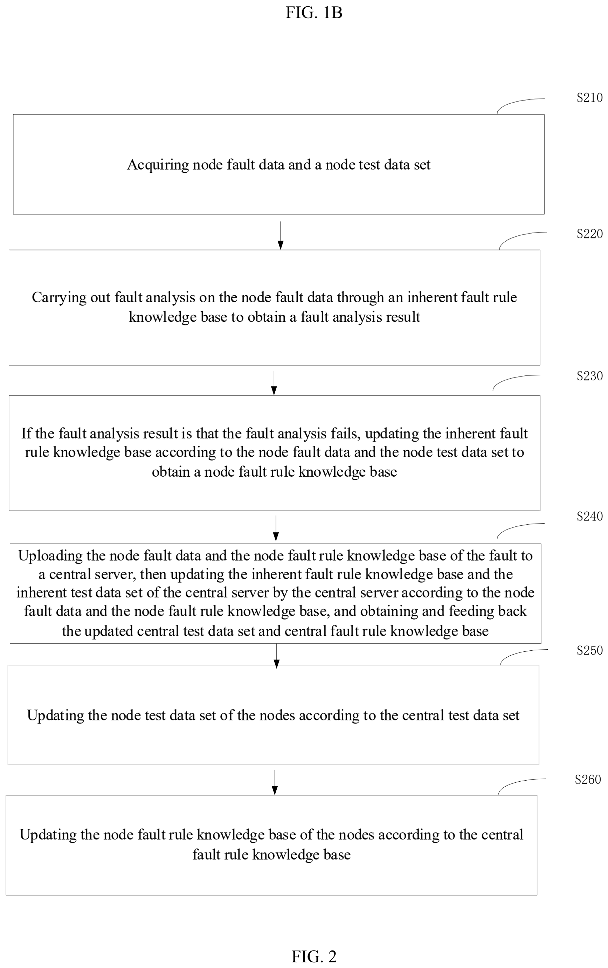

FIG. 2 is a flow chart of a fault rule knowledge base updating method provided by an Embodiment 2 of the present invention, and this embodiment can be suitable for a situation of comprehensively and automatically updating a fault rule knowledge base. The method can be implemented by a fault rule knowledge base updating apparatus, the fault rule knowledge base updating apparatus can be implemented in a form of hardware and/or software, and the fault rule knowledge base updating apparatus can be installed in an electronic device, for example, a node server.

As shown in FIG. 2, the method is applied to the node server and comprises the following steps.

In step S210, node fault data and a node test data set are acquired.

The node fault data can be fault data generated by the railway signal device of a station/section with the node server; and the node test data set can be a fault test data set which is generated through a large amount of different types of fault data and is configured for testing the fault rule knowledge base. The fault test data set can comprise fault test cases obtained by combining different fault data and is configured for carrying out rule test on the fault rule knowledge base.

In step S220, fault analysis is carried out on the node fault data through an inherent fault rule knowledge base to obtain a fault analysis result.

At least one fault rule is configured in the fault rule knowledge base, and the fault rules have an association relationship; when the fault data with different fault features are inputted into the fault rule knowledge base, the fault rule can analyze the fault cause based on the fault features of the inputted fault data so as to obtain a fault conclusion; and if the obtained fault reason and/or fault conclusion is associated with other fault rules, the fault conclusion can be continuously analyzed through other fault rules so as to obtain a final fault conclusion.

By way of example, the node server utilizes the inherent fault rule knowledge base to perform fault analysis on the node fault data, and determines whether the conclusion data such as the fault reason corresponding to the node fault data can be successfully analyzed; if yes, the fault analysis result is that the fault analysis is successful; and if not, the fault analysis result is that the fault analysis fails. An initial fault rule database of the node server is distributed by the central server and is continuously optimized in subsequent fault analysis, so that the inherent fault rule database is continuously updated.

If the node server fails in fault analysis on the node fault data based on the inherent fault rule knowledge base, the node fault data and the node test data set will be utilized to update the inherent fault rule knowledge base so as to obtain the node fault rule knowledge base, and then the node fault data and the node fault rule knowledge base are uploaded to the central server.

In step S230, if the fault analysis result is that the fault analysis fails, the inherent fault rule knowledge base is updated according to the node fault data and the node test data set to obtain the node fault rule knowledge base.

In an optional embodiment, the updating the inherent fault rule knowledge base according to the node fault data and the node test data set to obtain the node fault rule knowledge base, comprises: updating the inherent fault rule knowledge base according to the node fault data to obtain the updated inherent fault rule knowledge base; updating the node test data set through the node fault data, and testing the updated inherent fault rule knowledge base through the updated node test data set to obtain a second test result; and if the second test result is that the test is passed, determining the updated inherent fault rule knowledge base to be the node fault rule knowledge base.

By way of example, the fault rule in the inherent fault rule knowledge base is updated according to the node fault data, and the specific updating way can be a way of manually updating the fault rules by related technicians such as related field experts based on the actual experience values, and can also be a way of automatically updating based on a pre-trained fault rule updating model. The fault rule updating model can be obtained by pre-training based on historical fault data.

The node server utilizes the fault data to update the inherent node test data set, specifically, it can be performed in a way of: adding the fault data into the test case in the node test data set; testing the updated inherent fault rule knowledge base through the updated node test data set to obtain the second test result; if the second test result is that the test is passed, determining the updated inherent fault rule knowledge base to be the node fault rule knowledge base, and transmitting the node fault data and the node fault rule knowledge base to the central server; and if the second test result is that the test is not passed, only feeding back the node fault data to the central server.

Optionally, if the second test result is that the test is not passed, the node fault data will be uploaded to the central server, then the central server updates the inherent test data set and the inherent fault rule knowledge base according to the node fault data to obtain the central test data set and the central fault rule knowledge base, the central fault rule knowledge base is tested through the central test data set, and after the test is passed, the central fault rule knowledge base is fed back.

By way of example, the inherent test data set of the central server is updated by the central server according to the node fault data to obtain the central test data set; and the inherent fault rule knowledge base is updated through the node fault data, the specific way can be a manual or automatic updating way, which is not limited in this embodiment, and then the updated central fault rule knowledge base is obtained. The central fault rule knowledge base is tested through the central test data set, and the central fault rule knowledge base is fed back to the node server after the test is passed; and if the test is not passed, related technicians will intervene in knowledge base updating.

In step S240, the node fault data and the node fault rule knowledge base are updated to the central server, then the inherent fault rule knowledge base and the inherent test data set of the central server are updated by the central server according to the node fault data and the node fault rule knowledge base, and the updated central test data set and central fault rule knowledge base are obtained and fed back.

By way of example, the node server uploads the node fault data and the node fault rule knowledge base to the central server; the central server updates the inherent test data set through the node fault data of each node server to obtain the central test data set; and the inherent fault rule knowledge base is updated through the node fault rule knowledge base of each node server to obtain the central fault rule knowledge base. The central server transmits the central test data set and the central fault rule knowledge base to each node server.

In an optional embodiment, before the central test data set and the central fault rule knowledge base are transmitted to each node server, the central test data set is utilized to test the central fault rule knowledge base to obtain the first test result; and if the first test result is that the test is not passed, the node fault data of each node server is utilized to update the central fault rule knowledge base so as to obtain the updated central fault rule knowledge base.

By way of example, the central server utilizes the central test data set to test the central fault rule knowledge base, determines whether there is a rule conflict, and if so, namely, the first test result is that the test is not passed, the node fault data of each node server is utilized to update the central fault rule knowledge base, specifically, a fault alarm prompt can be given to remind related technicians to manually update; or automatic updating can be carried out in a model mode, specifically, the node fault data of each node server can be inputted into the pre-trained fault rule generation model to obtain the fault rules outputted by the model.

It is to be noted that the way of utilizing the automatic test case in the central test data set to perform automatic test on the central fault rule knowledge base can be timed testing, specifically, a fixed test triggering time can be set, and when the test triggering time is up, the test case will be automatically executed to automatically test the fault rule knowledge base.

By way of example, the central server transmits the central test data set and the central fault rule knowledge base to each node server; after receiving the central test data set and the central fault rule knowledge base, the node server updates a local inherent node test data set through the central test data set; and the local inherent node fault rule knowledge base is updated through the central fault rule knowledge base to obtain an updating result, including updating success and updating failure, and the updating result is fed back to the central server, so that the central server determines whether to perform subsequent updating measures.

In step S250, the node test data set of the nodes is updated according to the central test data set.

By way of example, the node test data set of the nodes of the node server is updated through the central test data set, and the updating result is fed back to the central server.

In step S260, the node fault rule knowledge base of the nodes is updated according to the central fault rule knowledge base.

By way of example, the node fault rule knowledge base of the nodes of the node server is updated through the central fault rule knowledge base, and the updating result is fed back to the central server

According to the technical solution in the embodiments of the present invention, the method comprises: performing fault analysis on the node fault data through the inherent fault rule knowledge base so as to obtain the fault analysis result; if the fault analysis result is that the fault analysis fails, updating the inherent fault rule knowledge base according to the node fault data and the node test data set so as to obtain the node fault rule knowledge base; uploading the node fault data and the node fault rule knowledge base to the central server, then updating the inherent fault rule knowledge base and the inherent test data set of the central server according to the node fault data and the node fault rule knowledge base by the central server, and obtaining and feeding back the updated central test data set and the central fault rule knowledge base; updating the node test data set of the nodes according to the central test data set; and updating the node fault rule knowledge base according to the central fault rule knowledge base. In the above technical solution, the fault rule knowledge base is updated by combining the fault data of each node server, therefore, the fault rule knowledge base is updated and perfected, the fault rule knowledge base is iteratively updated comprehensively, completely and rapidly, the updating range of the fault rule knowledge base and the fault data is greatly expanded, and the fault rule knowledge base is updated more comprehensively, accurately and effectively.

### Embodiment 3

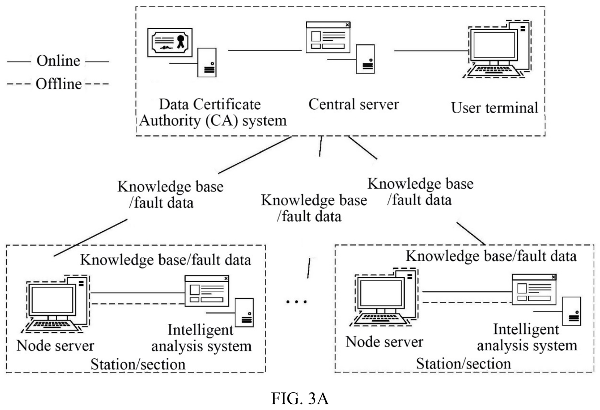

FIG. 3A is a schematic diagram of an architecture of a fault rule knowledge base updating system provided by an Embodiment 3 of the present invention. This embodiment further provides a preferred embodiment based on the technologies of above embodiments.

As shown in FIG. 3A, in order to ensure the security of communication transmission data between the central server and each node server and avoid the risk of malicious data tampering, a data Certificate Authority (CA) system can be used for issuing data certificates to the central server and the node servers respectively. The data CA system can be used for issuing digital certificates to the node servers distributed in national stations/sections and carrying out identity authentication, and supporting online and offline mode interaction certificates and authentication messages. Moreover, the data certificate can also be distributed to the central server, so that the identities of the communication parties and the security of the data are protected, and the risks of data tampering, interception, counterfeiting and the like are avoided. A user terminal is used for providing a human-computer interaction interface, and related operators or users can select corresponding functions through the human-computer interaction interface of the user terminal, such as correction of knowledge base rules.

The corresponding node servers are distributed in each station/section; and an intelligent analysis system can be used for carrying out fault analysis, and it can be deployed in the node servers, and can also be independently deployed relative to the node servers. In this embodiment, in order to improve the data processing efficiency, the intelligent analysis system is deployed on other servers independent of the node server.

The node server can receive the knowledge base and the test case set distributed by the central server on line according to a set strategy, automatically convert the knowledge base distributed by the central server into a database file and transmit to the intelligent analysis system in an online or offline manner. The intelligent analysis system is provided with an online and offline reading interface for adding the knowledge base; and it is needed to additionally install a network isolation device at the boundary when the online manner is utilized, and a special storage device is utilized when the offline manner is utilized.

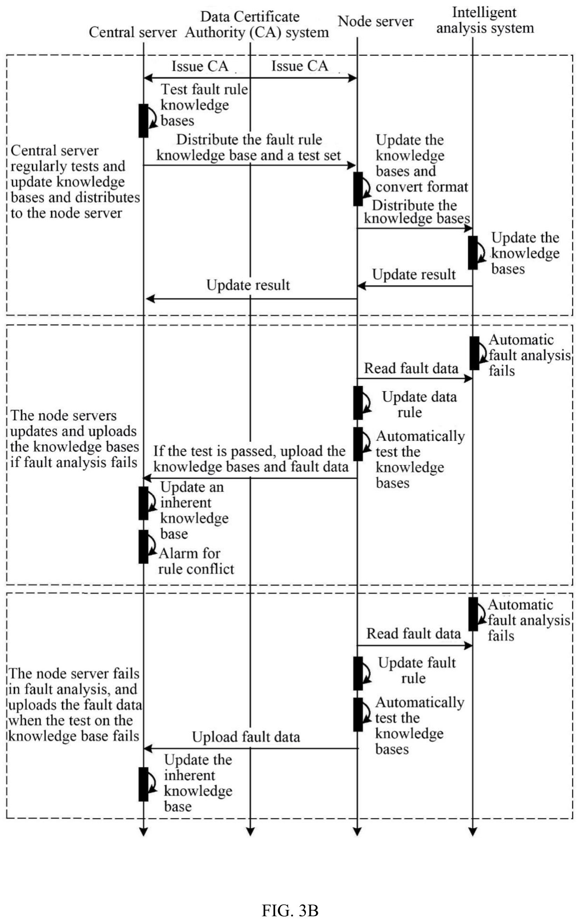

FIG. 3B is a schematic diagram of interaction of a fault rule knowledge base updating method provided by an Embodiment 3 of the present invention.

The digital CA system issues the data certificates to the central server and the node servers in advance, and the central server and the node servers need to carry related digital certificates in architecture data transmission process to prove identities, thereby realizing secure data transmission. The digital certificates at least comprise a public key, user information, digital certificate system information, effective time, a certificate serial number, a signature and the like.

The central server can start the test cases at regular time to automatically test the inherent fault rule knowledge base, and distribute the fault rule knowledge base and the test cases to the node server after the test is passed; the node server receives the fault rule knowledge base and then performs knowledge base format conversion; and the intelligent analysis system updates the fault rule knowledge base of the nodes and the test cases and feeds back the updating result to the central server.

When the intelligent analysis system of the station/section fails in fault analysis, the station/section maintainer can download the fault data from the intelligent analysis system online or offline, add rules to the knowledge base according to the fault data, match the test cases with the newly added rules to the current fault data, and execute full data test. If the test is passed, the knowledge base and the fault data will be uploaded to the central server, and the central server merges the knowledge base and the case bases in real time. And if the test is not passed, only the fault data is uploaded to the central server, and the central server will summarize the fault cases to a unsolved fault case base.

When the intelligent analysis system fails in fault analysis, the station/section maintainer may not add the knowledge base rules, only describe the fault data and directly upload the fault data, and the central server will summarize the fault cases to the unsolved fault case base.

When receiving the fault rule knowledge base distributed by the central server, the node server performs format conversion. When the node server is connected with the intelligent analysis system online, the fault rule knowledge base will be automatically distributed; when the node server is connected with the intelligent analysis system offline, the knowledge base will be prompted to be updated, and the connection mode can be modified through configuration data. If the node server is connected in the online manner, an operator can manually trigger or regularly update the knowledge base rules from the node server. If the node server is connected in the offline manner, when an operator plugs in a special mobile storage medium, the knowledge base in the mobile medium will be automatically read and loaded.

System research and development personnel of the central server can check the legality of the newly added rules of the knowledge base uploaded by the node server, the check range comprises grammar legality, the new rules are not covered by existing knowledge base rules, the new rules pass full-amount fault test cases, and the statement coverage rate of automatic test of the new rules reaches 100%; and after all the above conditions are passed, the rules will be merged into a main knowledge base. The system research and development personnel merge the fault case bases on the check node server, check the adaptability of the existing knowledge base rules to the cases, update the existing knowledge base and complete automatic testing; and after the test is passed, the main knowledge base and the automatic test case set are updated.

### Embodiment 4

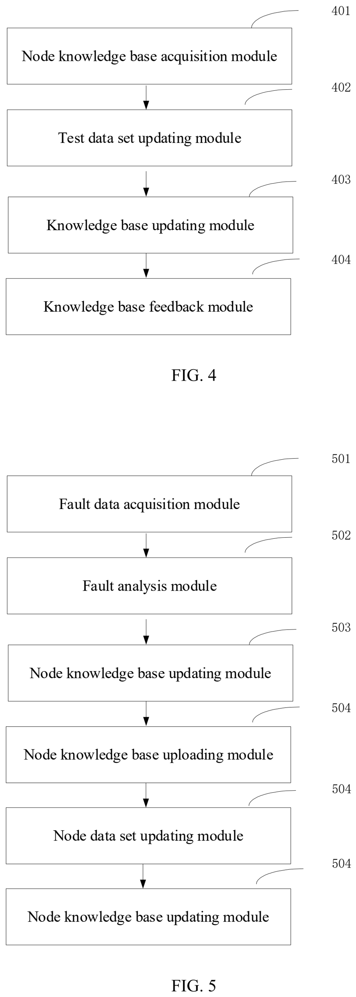

FIG. 4 is a schematic structural diagram of a fault rule knowledge base updating apparatus provided by an Embodiment 4 of the present invention. The embodiment of the present invention provides the fault rule knowledge base updating apparatus, this apparatus is suitable for a situation of comprehensively and automatically updating a fault rule knowledge base, the fault rule knowledge base updating apparatus can be implemented in a form of hardware and/or software, and the fault rule knowledge base updating apparatus can be installed in a central server, as shown in FIG. 4, the apparatus specifically comprises a node knowledge base acquisition module 401, a test data set updating module 402, a knowledge base updating module 403 and a knowledge base feedback module 404.
the node knowledge base acquisition module 401 is configured for acquiring node fault data and a node fault rule knowledge base uploaded by at least one node server, the node fault rule knowledge base being obtained by the node server updating an inherent fault rule knowledge base according to the node fault data and a node test data set when performing fault analysis on acquired node fault through the inherent fault rule knowledge base and failing in fault analysis;
the first test data set updating module 402 is configured for updating an inherent test data set through the node fault data of each node server to obtain a central test data set;
the first knowledge base updating module 403 is configured for updating the inherent fault rule knowledge base through the node fault rule knowledge base of each node server to obtain a central fault rule knowledge base; and
the first knowledge base feedback module 404 is configured for transmitting the central test data set and the central fault rule knowledge base to each node server, then updating the node test data set of the nodes of the node server according to the central test data set by each node server, and updating the node fault rule knowledge base of the nodes of the node server according to the central fault rule knowledge base.

According to the technical solution in the embodiments of the present invention, the method comprises: acquiring the node fault data and the node fault rule knowledge base uploaded by the at least one node server, the node fault rule knowledge base being obtained by the node server updating the inherent fault rule knowledge base according to the node fault data and the node test data set; updating the inherent test data set through the node fault data to obtain the central test data set; updating the inherent fault rule knowledge base through each node fault rule knowledge base to obtain the central fault rule knowledge base; and transmitting the central test data set and the central fault rule knowledge base to each node server, then updating the node test data set of the nodes of the node server according to the central test data set by each node server, and updating the node fault rule knowledge base of the nodes of the node server according to the central fault rule knowledge base. In the above technical solution, the fault rule knowledge base is updated by combining the fault data of each node server, therefore, the fault rule knowledge base is updated and perfected, the fault rule knowledge base is iteratively updated comprehensively, completely and rapidly, the updating range of the fault rule knowledge base and the fault data is greatly expanded, and the fault rule knowledge base is updated more comprehensively, accurately and effectively.

Optionally, the apparatus further comprises:
a first test result generation module configured for before the central test data set and the central fault rule knowledge base are transmitted to each node server, utilizing the central test data set to test the central fault rule knowledge base to obtain a first test result; and
a second knowledge base updating module configured for if the first test result is that the test is not passed, utilizing the node fault data of each node server to update the central fault rule knowledge base to obtain the updated central fault rule knowledge base.

Optionally, the apparatus further comprises:
a fault data acquisition module configured for acquiring the node fault data uploaded by the node server;
a second test data set updating module configured for updating the inherent test data set according to the node fault data to obtain the central test data set;
a third knowledge base updating module configured for updating the inherent fault rule knowledge base according to the node fault data to obtain the central fault rule knowledge base; and
a third knowledge base feedback module configured for testing the central fault rule knowledge base by the central test data set, and feeding back the central fault rule knowledge base to the node server after the test is passed.

The fault rule knowledge base updating apparatus provided by the embodiment of the present invention can be configured for executing the fault rule knowledge base updating method provided by any embodiment of the present invention and has corresponding function modules and beneficial effects of executing the method.

### Embodiment 5

FIG. 5 is a schematic structural diagram of a fault rule knowledge base updating apparatus provided by an Embodiment 5 of the present invention. The embodiment of the present invention provides the fault rule knowledge base updating apparatus, this apparatus is suitable for a situation of comprehensively and automatically updating a fault rule knowledge base, the fault rule knowledge base updating apparatus can be implemented in a form of hardware and/or software, and the fault rule knowledge base updating apparatus can be installed in a node server, as shown in FIG. 4, the apparatus specifically comprises a fault data acquisition module 501, a fault analysis module 502, a node knowledge base updating module 503, a node knowledge base uploading module 504, a node data set updating module 505 and a node knowledge base updating module 506.

The fault data acquisition module 501 is configured for acquiring node fault data and a node test data set;
the fault analysis module 502 is configured for carrying out fault analysis on the node fault data through an inherent fault rule knowledge base to obtain a fault analysis result;
the node knowledge base updating module 503 is configured for if the fault analysis result is that the fault analysis fails, updating the inherent fault rule knowledge base according to the node fault data and the node test data set to obtain a node fault rule knowledge base;
the node knowledge base uploading module 504 is configured for uploading the node fault data and the node fault rule knowledge base to a central server, then updating the inherent fault rule knowledge base and the inherent test data set of the central server according to the node fault data and the node fault rule knowledge base by the central server, and obtaining and feeding back the updated central test data set and central fault rule knowledge base;
the node data set updating module 505 is configured for updating the node test data set of the nodes according to the central test data set; and
the node knowledge base updating module 506 is configured for updating a node fault rule knowledge base of the nodes according to the central fault rule knowledge base.

According to the technical solution in the embodiments of the present invention, the method comprises: performing fault analysis on the node fault data through the inherent fault rule knowledge base so as to obtain the fault analysis result; if the fault analysis result is that the fault analysis fails, updating the inherent fault rule knowledge base according to the node fault data and the node test data set so as to obtain the node fault rule knowledge base; uploading the node fault data and the node fault rule knowledge base to the central server, then updating the inherent fault rule knowledge base and the inherent test data set of the central server according to the node fault data and the node fault rule knowledge base by the central server, and obtaining and feeding back the updated central test data set and the central fault rule knowledge base; updating the node test data set of the nodes according to the central test data set; and updating the node fault rule knowledge base according to the central fault rule knowledge base. In the above technical solution, the fault rule knowledge base is updated by combining the fault data of each node server, therefore, the fault rule knowledge base is updated and perfected, the fault rule knowledge base is iteratively updated comprehensively, completely and rapidly, the updating range of the fault rule knowledge base and the fault data is greatly expanded, and the fault rule knowledge base is updated more comprehensively, accurately and effectively.

Optionally, the node knowledge base updating module 503 comprises:
a rule knowledge base updating unit configured for updating the inherent fault rule knowledge base according to the node fault data to obtain an updated inherent fault rule knowledge base;
a test data set updating unit configured for updating the node test data set through the node fault data, and testing the updated inherent fault rule knowledge base through the updated node test data set to obtain a second test result; and
a node knowledge base updating unit configured for if the second test result is that the test is passed, determining the updated inherent fault rule knowledge base to be the node fault rule knowledge base.

Optionally, the apparatus further comprises:
a fault data uploading module configured for if the second test result is that the test is not passed, uploading the node fault data to the central server, then updating the inherent test data set and the inherent fault rule knowledge base by the central server according to the node fault data to obtain the central test data set and the central fault rule knowledge base, testing the central fault rule knowledge base through the central test data set, and feeding back the central fault rule knowledge base after the test is passed.

The fault rule knowledge base updating apparatus provided by the embodiment of the present invention can be used for executing the fault rule knowledge base updating method provided by any embodiment of the present invention and has corresponding function modules and beneficial effects of executing the method.

### Embodiment 6

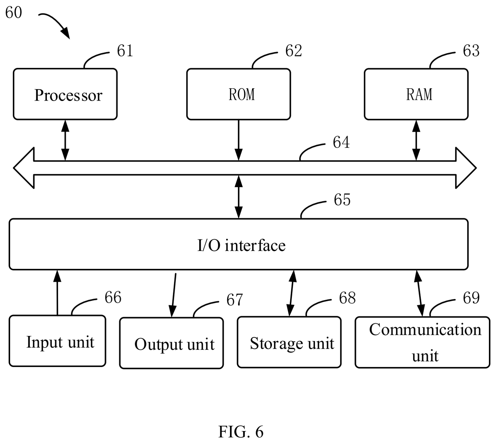

FIG. 6 is a schematic structural diagram of an electronic device 60 for implementing the embodiments of the present invention. The electronic device represents various forms of digital computers, such as laptops, desktop computers, workstations, personal digital assistants, servers, blade servers, mainframes, and other suitable computers. The electronic device may also represent various forms of mobile apparatuses, such as personal digital assistants, cellular phones, smart phones, wearable devices (e.g., helmets, glasses, and watches), and other similar computing devices. The components shown herein, connections and relationships thereof, and functions thereof are merely examples, and are not intended to limit the implementations of the present invention described and/or claimed herein.

As shown in FIG. 6, the electronic device 60 comprises at least one processor 61, and a memory in communication with the at least one processor 61, such as a read-only memory (ROM) 62 and a random-access memory (RAM) 63. The memory stores computer programs that can be executed by the at least one processor. The processor 61 can execute various appropriate actions and processes according to the computer programs stored in the read-only memory (ROM) 62 or loaded from a storage unit 68 into the random-access memory (RAM) 63. Various programs and data required in the operation of the electronic device 60 can also be stored in RAM 63. The processor 61, the ROM 62, and the RAM 63 are connected to each other via a bus 64. An input/output (I/O) interface 65 is also connected to the bus 64.

Multiple components of the electronic device 60 are connected to the I/O interface 65, comprising: an input unit 66, such as a keyboard, and a mouse; an output unit 67, such as various types of displays, and speakers.; the storage unit 68, such as a disk, and an optical disc; and a communication unit 69, such as a network card, a modem, and a wireless communication transceiver. The communication unit 69 allows the electronic device 60 to exchange information/data with other devices through computer networks such as the Internet and/or various telecommunication networks.

The processor 61 can be any general and/or dedicated processing component with processing and computing capabilities. Some examples of the processor 61 comprise, but are not limited to, a central processing unit (CPU), a graphics processing unit (GPU), various dedicated artificial intelligence (AI) computing chips, processors that run machine learning model algorithms, digital signal processors (DSPs), and any suitable processors, controllers, microcontrollers, and the like. The processor 61 executes the various methods and processes described above, such as the fault rule knowledge base updating method.

In some embodiments, the fault rule knowledge base updating method may be implemented as a computer program, which is tangibly embodied in a computer-readable storage medium, such as the storage unit 68. In some embodiments, all or part of the computer program can be loaded and/or installed onto the electronic device 60 via the ROM 62 and/or communication unit 69. When the computer program is loaded into the RAM 63 and executed by the processor 61, one or more steps of the fault rule knowledge base updating method described above can be performed. Optionally, in other embodiments, the processor 61 can be configured to perform the fault rule knowledge base updating method by any other suitable manner (e.g., via firmware).

The various implementation modes of the systems and technologies described above can be implemented in digital electronic circuit systems, integrated circuit systems, field-programmable gate arrays (FPGAs), application-specific integrated circuits (ASICs), application-specific standard products (ASSPs), system-on-chip (SoC) systems, complex programmable logic devices (CPLDs), computer hardware, firmware, software, and/or any combination thereof. These various embodiments may comprise implementations in one or more computer programs, which can be executed and/or interpreted on a programmable system comprising at least one programmable processor. Such programmable processor can be a dedicated or general programmable processor, and can receive data and instructions from a storage system, at least one input apparatus, and at least one output apparatus, and transmit data and instructions to the storage system, the at least one input apparatus, and the at least one output apparatus.

The computer programs for implementing the method in the present invention can be written in any combination of one or more programming languages. These computer programs can be provided to a general computer, a dedicated computer, or the processor of other programmable data processing devices, so that when the computer program is executed by the processor, the functions/operations specified in the flow charts and/or block diagrams can be implemented. The computer programs can be executed entirely in a machine, partially in a machine, partially in a machine as an independent software package and partially in a remote machine, or entirely in a remote machine or server.

In the context of the present disclosure, the machine-readable medium can be a tangible medium that may contain or store computer programs for use by or in combination with an instruction execution system, apparatus, or device. The machine-readable medium can comprise, but is not limited to, electronic, magnetic, optical, electromagnetic, infrared, or semiconductor system, apparatus, or device, or any suitable combination of the foregoing. Optionally, the machine-readable medium can be a machine-readable signal medium. A more specific example of the machine-readable storage medium may comprise an electrical connector based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

To provide interaction with the user, the systems and technologies described herein can be implemented in the electronic apparatus, the electronic device comprising: a display apparatus for displaying information to the user (for example, a CRT (cathode ray tube) or LCD (liquid crystal display) monitor); and a keyboard and pointing apparatus (for example, a mouse or trackball) through which the user can provide input to the electronic apparatus. Other types of apparatuses can also be used to provide interaction with the user; for example, feedback provided to the user can be in any form of sensory feedback (for example, visual feedback, auditory feedback, or tactile feedback); and the input from the user can be received in any form (comprising voice input, speech input, or tactile input).

The systems and technologies described herein can be implemented in a computing system that comprises backend components (e.g., as a data server), or in a computing system that comprises middleware components (e.g., an application server), or in a computing system that comprises frontend components (e.g., a user computer with a graphical user interface or a web browser, through which the user can interact with implementations of the systems and technologies described herein), or in any combination of such backend, middleware, or frontend components. The components of the system can be interconnected via digital data communication in any form or medium (e.g., communication networks). Examples of communication networks comprise: local area networks (LANs), wide area networks (WANs), blockchain networks, and the Internet.

The computing system can comprise clients and servers. The clients and the servers are generally distant from each other and usually interact through the communication network. The client-server relationship is established by running computer programs that have a client-server relationship with each other on the respective computers. The server can be a cloud server, also known as a cloud computing server or cloud host, which is a host product in the cloud computing service system, designed to overcome the defects of traditional physical hosts and VPS services, such as high management difficulty and weak business expandability.

It is to be understood that various forms of processes shown above can be used to perform steps of reordering, adding or deleting. For example, the steps described in the present invention can be performed in parallel, sequentially, or in different orders, as long as the desired results of the technical solutions of the present invention can be achieved. There are no limitations herein.

The above specific embodiments do not constitute a limitation of the scope of protection of the present invention. Those skilled in the art should understand that various modifications, combinations, sub-combinations, and substitutions can be made according to design requirements and other factors. Any modifications, equivalent replacements, and improvements made within the spirit and principle of the present invention should be comprised within the scope of protection of the present invention.

## Claims

1. A fault rule knowledge base updating method, applied to a central server, comprising:
acquiring node fault data and a node fault rule knowledge base uploaded by at least one node server, the node fault rule knowledge base being obtained by the node server updating an inherent fault rule knowledge base according to the node fault data and a node test data set when performing fault analysis on the acquired node fault through the inherent fault rule knowledge base and failing in fault analysis;
updating an inherent test data set through the node fault data of each node server to obtain a central test data set;
updating the inherent fault rule knowledge base through the node fault rule knowledge base of each node server to obtain a central fault rule knowledge base; and
transmitting the central test data set and the central fault rule knowledge base to each node server, then updating the node test data set of the nodes of the node server according to the central test data set by each node server, and updating the node fault rule knowledge base of the nodes of the node server according to the central fault rule knowledge base.

2. The method according to claim 1, wherein before the transmitting the central test data set and the central fault rule knowledge base to each node server, the method further comprises:
utilizing the central test data set to test the central fault rule knowledge base to obtain a first test result; and
if the first test result is that the test is not passed, utilizing the node fault data of each node server to update the central fault rule knowledge base to obtain the updated central fault rule knowledge base.

3. The method according to claim 1, further comprising:
acquiring the node fault data uploaded by the node server;
updating the inherent test data set according to the node fault data to obtain the central test data set;
updating the inherent fault rule knowledge base according to the node fault data to obtain the central fault rule knowledge base; and
testing the central fault rule knowledge base by the central test data set, and feeding back the central fault rule knowledge base to the node server after the test is passed.

4. A fault rule knowledge base updating method, applied to a node server, comprising:
acquiring node fault data and a node test data set;
carrying out fault analysis on the node fault data through an inherent fault rule knowledge base to obtain a fault analysis result;
if the fault analysis result is that the fault analysis fails, updating the inherent fault rule knowledge base according to the node fault data and the node test data set to obtain a node fault rule knowledge base;
uploading the node fault data and the node fault rule knowledge base to a central server, then updating the inherent fault rule knowledge base and the inherent test data set of the central server according to the node fault data and the node fault rule knowledge base by the central server, and obtaining and feeding back the updated central test data set and central fault rule knowledge base;
updating the node test data set of the nodes according to the central test data set; and
updating the node fault rule knowledge base of the nodes according to the central fault rule knowledge base.

5. The method according to claim 4, wherein the updating the inherent fault rule knowledge base according to the node fault data and the node test data set to obtain the node fault rule knowledge base, comprises:
updating the inherent fault rule knowledge base according to the node fault data to obtain the updated inherent fault rule knowledge base;
updating the node test data set through the node fault data, and testing the updated inherent fault rule knowledge base through the updated node test data set to obtain a second test result; and
if the second test result is that the test is passed, determining the updated inherent fault rule knowledge base to be the node fault rule knowledge base.

6. The method according to claim 5, further comprising:
if the second test result is that the test is not passed, uploading the node fault data to the central server, then updating the inherent test data set and the inherent fault rule knowledge base by the central server according to the node fault data to obtain the central test data set and the central fault rule knowledge base, testing the central fault rule knowledge base through the central test data set, and feeding back the central fault rule knowledge base after the test is passed.

7. A fault rule knowledge base updating apparatus, applied to a central server, comprising:
a node knowledge base acquisition module configured for acquiring node fault data and a node fault rule knowledge base uploaded by at least one node server, the node fault rule knowledge base being obtained by the node server updating an inherent fault rule knowledge base according to the node fault data and a node test data set when performing fault analysis on acquired node fault through the inherent fault rule knowledge base and failing in fault analysis;
a test data set updating module configured for updating an inherent test data set through the node fault data of each node server to obtain a central test data set;
a knowledge base updating module configured for updating the inherent fault rule knowledge base through the node fault rule knowledge base of each node server to obtain a central fault rule knowledge base; and
a knowledge base feedback module configured for transmitting the central test data set and the central fault rule knowledge base to each node server, then updating the node test data set of the nodes of the node server according to the central test data set by each node server, and updating the node fault rule knowledge base of the nodes of the node server according to the central fault rule knowledge base.

8. A fault rule knowledge base updating apparatus, applied to a node server, comprising:
a fault data acquisition module configured for acquiring node fault data and a node test data set;
a fault analysis module configured for carrying out fault analysis on the node fault data by an inherent fault rule knowledge base to obtain a fault analysis result;
a node knowledge base updating module configured for if the fault analysis result is that the fault analysis fails, updating the inherent fault rule knowledge base according to the node fault data and the node test data set to obtain a node fault rule knowledge base;
a node knowledge base uploading module configured for uploading the node fault data and the node fault rule knowledge base to a central server, then updating the inherent fault rule knowledge base and the inherent test data set of the central server according to the node fault data and the node fault rule knowledge base by the central server, and obtaining and feeding back the updated central test data set and central fault rule knowledge base;
a node data set updating module configured for updating the node test data set of the nodes according to the central test data set; and
a node knowledge base updating module configured for updating a node fault rule knowledge base of the nodes according to the central fault rule knowledge base.

9. An electronic device, comprising:
at least one processor; and
a memory in communication connection with the at least one processor; and
the memory stores a computer program that can be executed by the at least one processor, and the at least one processor executes the fault rule knowledge base updating method according to claims 1 to 3 and/or any one of claims 4 to 6 by executing the computer program.

10. A computer-readable storage medium, storing a computer instruction, wherein the computer instruction is used for enabling a processor to execute the fault rule knowledge base updating method according to claims 1 to 3 and/or any one of claims 4 to 6 by executing the computer program.
